# EUROPEAN PATENT APPLICATION

(11) **EP 3 438 561 A1**
(43) Date of publication of application: **06.02.2019**
(21) Application number: 17184374.1
(22) Date of filing: 02.08.2017
(51) Int. Cl.: F24F 12/00, F24F 11/46, F24F 13/10, F24F 11/64, F24F 11/54, F24F 11/72

(54) **AIR HANDLING UNIT WITH INTERNAL HEAT PUMP**

(71) Applicant: Vanrenterghem, Kris, 9860 Balegem (BE)
(72) Inventor: Vanrenterghem, Kris, 9860 Balegem (BE)
(74) Representative: DenK iP

(57) **Abstract**

An air handling unit provides variable air flow and efficient air heating and cooling. It comprises an input air partition (110) with an evaporator unit (114), an output air partition (120) with a condenser (124) and an energy recuperation unit (130) which interchanges energy between the input air before the evaporator unit (114) and the output air before the condenser (124). Two bypasses (113, 123) recirculate air between the air supply and the air return ducts (111, 121). A damper (101) in the first bypass (113) controls the volume of input air reaching the condenser (124) from the input air partition (110). A damper (102) in the second bypass (123) controls the volume of return air reaching the evaporator unit (114) from the output air partition (120) A method and an air handling system are also provided.

## Description

### Field of the invention

The invention relates to the field of ventilation management systems and heat pump technology. More specifically it relates to an air handling system with energy recuperation, internal heat pump and air recirculation, an automatized control system and a method of air handling.

### Background of the invention

Air handling units with heat pumps force air from outdoors to closed spaces, such as inside of vehicles or buildings, via e.g. ventilators. Air is cooled down in a duct (normally, the "air supply duct") and heated up in another duct ("air return duct") via evaporators and condensers in the ducts. These are usually connected via a compressor. The efficiency of heat pumps is increased by adding an energy recuperation unit, such that the heat from the air of one duct is partially transferred to the other duct.

These systems normally function by continuously drawing fresh air indoors and removing used air outdoors. If the flow of air between the ducts is different, the heat pump may get into trouble. For example, there might be problems with defrosting mode in winter condition of the condenser unit, and with generating energy in cooling mode in the supply air section, because the return air volume in this principle is in fact an energy source for the heat pump. This increases risk of damage, requiring regular maintenance or even reparations. In order to minimize these risks, ensuring equal flows in both ducts is necessary, for example by adding regulated ventilators in the outlets of the ducts. This solution is not optimal, as it increases energy usage and it does not ensure a variable air flow.

Other systems comprise air conditioning control systems, in which an air supply duct comprises a battery for cooling or heating. A bridging duct may connect the air return duct with the air supply duct. A sensor detects parameters related to the indoor air quality, and if the quality of air is good enough, a damper controlling the amount of air that crosses the bridging duct may allow reusing the air back indoors. Usually, because of the damper, ventilators are placed which are working on variable air speed. This means that there are also variable air volumes for supply air and output air. Furthermore, there is even a possibility of a volume difference between the return air and the supply air by means of creating overpressure in some rooms (air leakage of those rooms creates different air volumes). Specific control systems can provide a higher indoor climate by creating overpressure (3 to 8Pa), for example in the so-called "clean rooms". A difference of air pressure may not be optimal in all circumstances. Besides, the energy consumption of the battery and ventilators is usually high, noise is produced and a great deal of the energy is wasted and dumped outdoors, all of which are environmental concerns.

Additionally, these systems may accumulate dust and, due to condensation and humidity, mold and microorganisms. Spores, bacteria and allergens may be released from the vents, which may cause diseases such as legionellosis. It is desirable to reduce the amount of maintenance in these systems.

### Summary of the invention

It is an object of embodiments of the present invention to provide an air handling unit providing high comfort with minimum maintenance, limited energy usage and limited energy losses.

It is an advantage of embodiments of the present invention that they provide variable air flow and efficient air heating and cooling. It is a further advantage that energy is saved by mixing input and recirculation air.

In a first aspect, the present invention comprises a device comprising air handling capabilities, comprising an input air partition including an air supply duct with an evaporator, an output air partition including an air return duct with a condenser and an energy recuperation unit in part of the air supply duct and in part of the air return duct. The energy recuperation unit provides thermal contact between both ducts and is adapted for interchanging energy between the input air before the evaporator and the output air before the condenser. The present invention further comprises a first and second recirculation bypasses (e.g. ducts, although any other air interchange system can be used) for recirculating air between the air supply and the air return ducts. The bypasses allow recirculation of the air in the parts of the ducts between the condenser and the energy recuperation unit, and between the evaporator and the energy recuperation unit, respectively. The present invention further comprises a damper in the first recirculation bypass, which controls the volume of input air reaching the condenser from the input air partition. A second damper in the second recirculation bypass controls the volume of return air reaching the evaporator from the output air partition.

In embodiments of the present invention, the device may comprise at least one supply pump in the input and/or output air partition, which may increase air pressure between the evaporator and at least one supply vent and/or between the condenser and at least one output vent. This advantageously allows fine tuning of air volume and flow in the ducts.

In embodiments of the present invention, the condenser may further comprise a compressor within the output air partition, in thermal contact with the air in the air return duct before the condenser. It is an advantage of embodiments of the present invention that the energy loss from operating the devices may heat up the output air. This may help reducing maintenance by delaying defrosting operation. It is a further advantage that part of the energy loss is retrieved.

In embodiments of the present invention, at least one air quality sensor may be included at least at the air supply duct and/or air return duct and/or outside the device. It is an advantage of embodiments of the present invention that the status of the device and conditions of the air, such as temperature and indoor air quality, can be tracked. In further embodiments, at least one sensor may be used for collecting information regarding the air in a region outside or inside the air handling unit. It is an advantage of embodiments of the present invention that the air handling unit may transmit to the user, or process, information regarding the temperature, speed, moisture and other variables of the air.

In some embodiments of the present invention, the device comprises a control unit for control of at least the dampers. It is an advantage of embodiments of the present invention that operation of the unit may be automated, allowing variability of air volumes.

In some embodiments of the present invention, the damper in the first bypass may be operatively connected to the damper in the second bypass, for performing the same control of air volume in both bypasses. It is an advantage of embodiments of the present invention that an easy system is provided, which may be controlled with a single actuator and a single switch, lowering manufacturing costs while at the same time providing the same air volume in both ducts. It is an advantage of embodiments of the present invention that it may optionally have the functionality of a common air handling unit.

In a second aspect, embodiments of the present invention comprise a control system for controlling a device according to embodiments of the first aspect, the control system comprising at least one actuator for opening and closing at least one damper in a bypass, and at least one controller for controlling the at least one actuator. It is an advantage of embodiments of the present invention that the control of dampers may be automatic and accurate.

In some embodiments of the present invention, the system may further comprise at least one pump for forcing air through an outlet, the at least one pump comprising a controller for modulating its speed. It is an advantage of embodiments of the present invention that air recirculation is enabled, and good control of the air volume through the ducts can be done.

In some embodiments of the present invention, the controller for modulating the pump speed may be adapted to control the operation of the at least one pump. It is an advantage of embodiments of the present invention that control of dampers or pumps can be done in an easy, centralized and integrated way using inexpensive components such as transistors.

In further embodiments, the system may comprise one or more sensors among the group of air quality sensor, temperature sensor, occupancy sensor, humidity sensor, etc. for sensing parameters of the air inside and/or outside the air handling unit. It is an advantage of embodiments of the present invention that the system may obtain environmental information and/or information regarding human activity, and that it may use this information in the air handling process.

In some embodiments of the present invention, a central processing unit may be included, e.g. comprising one or more processors and one or more memory tables, for control of at least the first and second damper. It is an advantage of embodiments of the present invention that the control of the handling unit may be performed in an electronic and/or automatic way.

Some embodiments of the present invention may further comprise a weather forecast module. For example, it can be included in the processing unit. It is an advantage of embodiments of the present invention that variables of outdoor weather and environmental conditions may be anticipated, allowing decreasing of energy consumption peaks and keeping high indoor comfort.

In a third aspect, the present invention comprises a method for controlling an air handling system according to embodiments of the first aspect. The method comprises the steps of
- introducing air through a first, input air partition,
- selectively recirculating air through a bypass comprising a damper for recirculating air to a second output air partition, the recirculating for instance being done by controlling the opening of the damper,
- flowing air in the input air partition through an energy recuperation unit,
- circulating the input air through an evaporator, and
- pumping the air through a supply vent with a pumping system into a room, cabin, or in general indoors.

The method further comprises removing air from indoors through a second, output air partition, selectively recirculating air through a bypass comprising a damper for recirculating air to the first, input air partition, e.g. by controlling the opening of the dampers, e.g. via a same or different signal, flowing the air in the output air partition through an energy recuperation unit, circulating the output air through a condenser, and pumping the air outdoors, through a supply vent, by means of a pumping system. The method further comprises regulating a predetermined volume of air in the input and output air partitions.

It is an advantage of embodiments of the present invention that defrosting operations of the handling unit may be reduced or eliminated. It is a further advantage that recirculation of air is made possible.

Some embodiments of the present method provide controlling the damper in the first and second bypasses via a same signal for obtaining a same volume of air in the input and output air partitions, for advantageously regulating a predetermined air volume through the ducts. This regulation may be performed by controlling the pumping systems of the input and output partitions. It is an advantage of embodiments of the present invention that a same flow in the return and supply ducts can be easily obtained, improving efficiency of the condenser and evaporator.

Some embodiments of the present method comprise sensing at least one environmental variable and then controlling the damper in the first and second bypasses as a response to the sensed variable. It is an advantage of embodiments of the present invention that the method allows automatic feedback from sensors, providing an adaptive system with high comfort and efficient energy usage.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 schematically illustrates an air handling system according to embodiments of the present invention.
FIG. 2 shows a lateral view of a compact design of an air handling system as in FIG. 1.
FIG. 3 shows a top view of a compact design of an air handling system as in FIG. 1.
FIG. 4 illustrates an automatic control system for an air handling unit according to embodiments of the present invention.
FIG. 5 illustrates a system for controlling an air handling unit according to embodiments of the present invention, the system comprising sensors.
FIG. 6 is a flow chart of a method of air handling system control according to embodiments of the present invention.

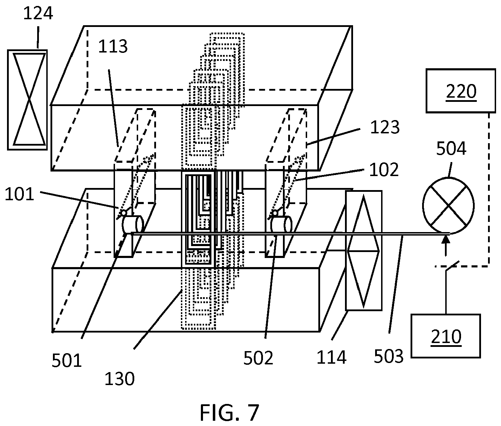

FIG.7 illustrates a portion of an air handling unit according to particular embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "duct", reference is made to a conduit of any suitable shape, cross-section and dimension, or a series of interconnected chambers, or any space that allows a volume of fluid or gas (e.g. air) to move from a first region to a second region (e.g. from outdoors to indoors) and vice-versa. It comprises at least one inlet in a first zone of the duct, and at least one outlet in a second zone of the duct, distant from the first zone. A duct may take air from a first region (such as outdoors) and introduce it in a second region (such as indoors) or vice-versa, through inlets or vents, called "input vent", "supply vent", "return vent" or "output vent", depending on whether the function of such inlet or vent is to bring air from the first region into the system, to introduce it into the second region, to extract it from the second region or to remove it from the system back to the first region, respectively.

Contrasted to a duct, a "bypass" is any conduit or series of interconnected chambers, or any space which allows a volume of fluid or gas to move between ducts.

An "energy recuperation (ER) unit" is a device that optimizes the interchange of energy in the fluid or gas (e.g. air) between two ducts. There may be a coincidental transfer of fluid or gas (e.g. air) through the ER, but the main use is the transfer of energy or heat.

Embodiments of the present invention relate to a ventilation system comprising an air-handling unit and an electronic control system therefor. Embodiments of the present invention also relate to a control method, that allows airflow control and use of recirculated air by means of dampers in bypasses between input and output air partitions of the air handling unit. The result is high efficiency air conditioning for heating and cooling with heat pumps. The process allows a reduction of losses by energy recuperation, with a minimum maintenance. The system and method allow processing of signals from one or more types of sensors, as well as control of determined elements in the unit (allowing control of volume of air, air temperature, and other variables). This unit can be connected to a building management systems (BMS), for example to follow working limits; maintenance provision; energy management; temperature control; etc. Advantageously, a system according to embodiments of the present invention may be able to further optimize energy utilization by tuning the operation according to a determined set of measurements and predictions processed by a built-in weather forecast module. The method may be applied using software. For example, standard software can be used on an electronic system.

In a first aspect, the present invention relates to an air handling unit, which is a device comprising air handling functions.

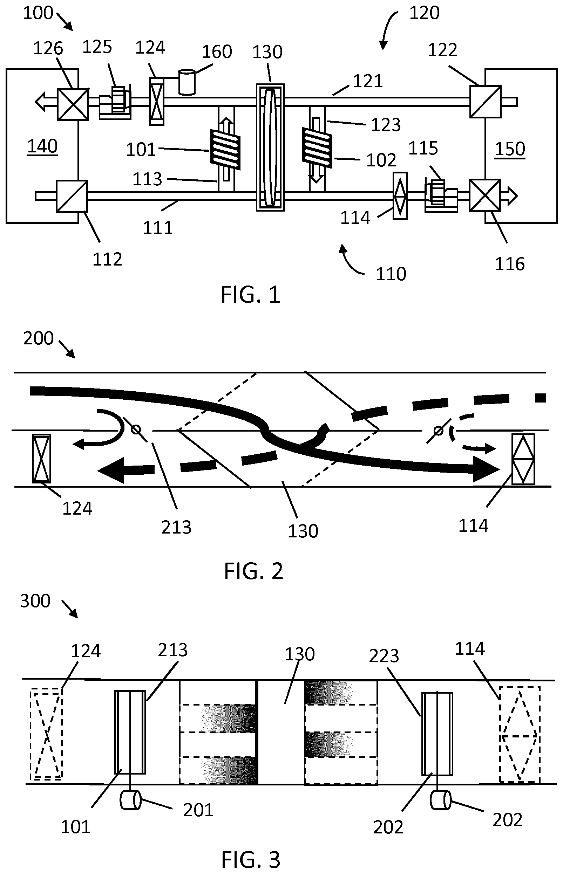

In embodiments of the present invention, as schematically shown in FIG. 1, an air handling unit 100 comprises an input air partition 110, an output air partition 120 and an ER unit 130, for heat transferal between a portion of an air supply duct 111 in the input air partition 110 and a portion of an air return duct 121 in the output air partition 120. This heat transferal may be done with air transferal (e.g. convection) or without air transferal (e.g. conduction). For example, a heat recovery wheel may perform the energy recuperation, but the present invention may comprise other energy recuperation systems such as for instance a plate heat exchanger, an energy recovery ventilation core, thermal wheel, a heat pipe, or any other suitable unit.

With reference to the input air partition 110 of FIG. 1, the air supply duct 111 may comprise at least one input vent 112 (which may comprise a filter or filtering unit, such as a net, a grill, an air purifier, etc.) for drawing air from a first region 140, such as the outside of a building or car. It may further comprise at least one outlet vent 116 for bringing the air into a second region 150, such as a room, corridor, car, etc. The outlet vent 116 may comprise a suitable filter or filtering unit, such as pleated media, high-efficiency particulate arrestance (HEPA) or electrostatic filters, etc.

With reference to the output air partition 120 of FIG. 1, the air return duct 121 may comprise at least one return vent 122 for drawing air, e.g. used or stale air, from the second region 150. Some embodiments may comprise a return vent 122 comprising a suitable filter or filtering unit, as before in the input and/or outlet vents 112, 116. The output vent 126 removes the air from the air handling unit 100 back into the first region 140. This output vent 126 may also comprise a suitable filter or filtering unit, as before in the input and/or outlet vents 112, 116.

An evaporator unit 114 is provided in the input air partition 110, on the air supply duct 111, for cooling incoming air before introducing it into the second region 150, and a condenser 124 is provided in the output air partition 120, on the air return duct 121, for heating air before evacuating it towards the first region 140.

In embodiments of the present invention, the supply duct 111 further comprises a bypass 113 between the input vent 112 and the ER unit 130. This bypass 113 regulates, via at least one damper 101, the transfer of air between the input air of the input air partition 110 and the condenser 124 of the output air partition 120. Between the ER unit 130 and the outlet vent 116 of the air supply duct 111, an evaporator unit 114 regulates the temperature and/or humidity of the input air. The evaporator unit 114 may be a single- or multiple-stage evaporator. It may be for example a natural or forced circulation evaporator, a falling film or rising film evaporator, climbing/falling film evaporator, plate heat exchanger type evaporator, etc., and it may be part of a heat pump, the present invention not being limited thereto

The air return duct 121 further comprises a second bypass 123 between its return vent 122 and the ER unit 130. This bypass regulates, via at least one damper 102, the transfer of air between the return air of the output air partition 120 and the evaporator unit 114 of the input air partition 110.

The damper 102 allows to re-use return air (e.g. when air quality is good), also recirculating air to be mixed with input air, which saves energy from operating the evaporator unit 114 and condenser 124. The second damper 102 creates a combined energy source for the heat pump with the return air and the input air. Further, dampers 101, 102 further ensure that the air volume of both air supply duct 111 and air return duct 121 are advantageously the same and enough for the heat pump to function correctly, which reduces or removes the problem of frost in the condenser unit 124, and may reduce the condensation and humidity, reducing proliferation of microorganisms and other health threats. The risk of failure is also thereby reduced.

In some embodiments of the present invention, a supply pump 115 and/or an exhaust pump 125 (e.g. ventilators) may be included, resp. between the evaporator unit 114 and the outlet vent and/or between the condenser 124 and the output vent 126, for forcing the air in and out of the system. The process of recycling waste heat, described for the condenser 124, can be also applied to the energy waste produced by the exhaust pump 125. Pump control may be used in combination with the damper control for an accurate control of the air volume between the ducts.

The present invention allows a great deal of customization and optional features. For example, the evaporator/condenser units 114, 124 may be a direct contact condenser, a heat pump, the present invention not being limited thereto. In those embodiments comprising a vapor-compression refrigeration system, the heat pump (e.g. the condenser) may include a compressor 160 for compressing a refrigerant (e.g. HFCFs, supercritical carbon dioxide, isobutane and isopentane, etc.). Two types of compressors may be used within those embodiments. Rotary screw type compressor and scroll type compressors. They may be in stand-alone configuration, or they may act combined, e.g. in twin, triple or quadruple configuration. They may as well be combined with on-off control phase, or optionally with multiple phase, e.g. with gliding frequency control. The compressor 160 may be advantageously built inside the output air partition 120. The energy loss of the compressor 160 can be directed to the air return duct 121 (e.g. by convective or radiative heat transfer, although any suitable technique may be applied), and it can be used to heat up the output air inside the air return duct 121, for example before the air enters the condenser 124, advantageously retrieving the compressor energy loss, reducing energy waste, reducing condensation, and further delaying or removing defrosting operation, hence reducing maintenance operations. Additionally, in urban applications, the device may be compact and integrated within a building, reducing noise surrounding the building environment hence reducing noise pollution.

In some embodiments, any or both of the dampers 101, 102 may be a multiblade or single blade (e.g. round blade) damper, and they may comprise a frame, seals (e.g. lip seals), aluminum airfoil blades, or steel or galvanized steel blades, the present invention not being limited thereto. Dampers may comprise other features, such as sensors (e.g. air quality sensors), actuators (for example, a motor linked to a shaft extension for electronically controlling the operation of closing and opening the damper, for controlling the volume of air crossing the damper), etc. As will be explained, sensors may also be comprised in the ducts or outside the ducts, for example temperature sensors, contamination and humidity sensors, etc.

The diagram 200 of FIG. 2 and the diagram 300 of FIG. 3 show a lateral and top view, respectively, of a compact design in which the bypasses 213, 223 are holes (rather than pipe-type ducts) between the input and output air partitions, the airflow through the holes being regulated by dampers 101, 102. The input air flow (marked by a thick arrow) enters and circulates on the top duct which is equivalent to the input air partition 110, and after it has flown through the energy recuperation unit 130, it flows through the bottom duct, and vice-versa for the case of the return air (marked by a dashed arrow).The energy recuperation unit 130 may be an air-to-air exchanger, such as a vertical or horizontal flat panel exchanger, but other more efficient recuperators (e.g. cellular air-to-air) may be used. In some embodiments of the present invention, the energy recuperation unit may comprise a thermal wheel, or a crossflow recuperation system. The design of airflow route can be adapted in accordance with the type of heat exchanger, recuperator, combinations thereof etc. Dampers may be controlled by actuators 201, 202, as illustrated in FIG. 3.

Further embodiments of the first aspect of the present invention may comprise an automatic control system for air handing. The control system can combine air handling with heat pump technology. The automatic control system may comprise at least variable control of the first and second damper of the air supply and air return ducts. Some embodiments of the present invention may comprise further control of at least one pump, energy recuperation unit, or control of the evaporator and condenser, room air temperature and pressure for example. All these functions can be performed in a single integrated control system.

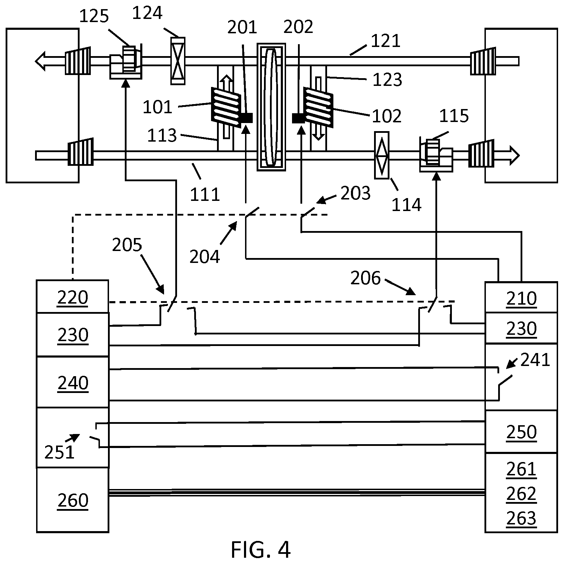

For example, in the particular embodiment schematically shown in FIG. 4, an air handling unit includes air supply and air return ducts 111, 121 with bypasses 113, 123 and their respective dampers 101, 102, each comprising an actuator 201, 202 connected to a control unit 210 for controlling the dampers together with the switch control 220. The regulation of dampers 101, 102 may be performed through switches 203, 204 (e.g. transistors) connected to the switch control 220 of an electric box. Both dampers 101, 102 may be controlled by the same measurements, so they have the same percentage of opening. In some embodiments, both dampers 101, 102 can be controlled independent from each other. In further embodiments, each component and each variable of the air handling unit may be controlled and/or measured independent from any other component.

The switch control 220 may also manage the operation of at least one pump 115, 125. In advantageous embodiments, the different pumps, e.g. ventilators, function on frequency control and maintain the same air volume. For example, as shown in FIG. 4, supply and exhaust pumps 115, 125 can be connected to a supply voltage, e.g. to a fan supply/fan return control units 230 different from the control unit 210 for the dampers 101, 102, although the present invention may be not limited thereto and the control units 210, 230 for the dampers 101, 102 and pumps 115, 125 may be one and the same device. The power supply or supplies for controlling the dampers and/or fans may be a DC or AC voltage supply, for example a variable voltage supply (0-10 V), although any suitable voltage supply may be used in embodiments of the present invention. The pumps 115, 125 may be controlled by pump switches 205, 206, respectively, for turning them on and off. These switches 205, 206 may also drive the pumps 115, 125 via frequency control, for example via a modulated signal.

Embodiments of the present invention provide a variable air flow, which can be automatically controlled. Some embodiments comprising control of pumps, combined with damper control, may provide very fine tuning of the air volume and flow.

In some embodiments of the present invention, the condenser 124, the evaporator unit 114, or both, may also be controlled by one and the same control unit (not shown in FIG. 4). In those embodiments of the present invention comprising a compressor, the compressor may also be controlled by the same control unit.

Embodiments of the present invention may include other features. Examples of further features include a remote control unit 240 and a switch 241 (e.g. a volt-free contact) for turning the device on and off via wireless signal, a general alarm system 250 (for example, in case of malfunction or filter failure) with a switch 251 (e.g. a volt-free contact, as before), and a master/slave unit 260. The master/slave unit may comprise controllers 261 and interfaces, such as a serial interfaces 262 or remote terminal units (RTU) 263.

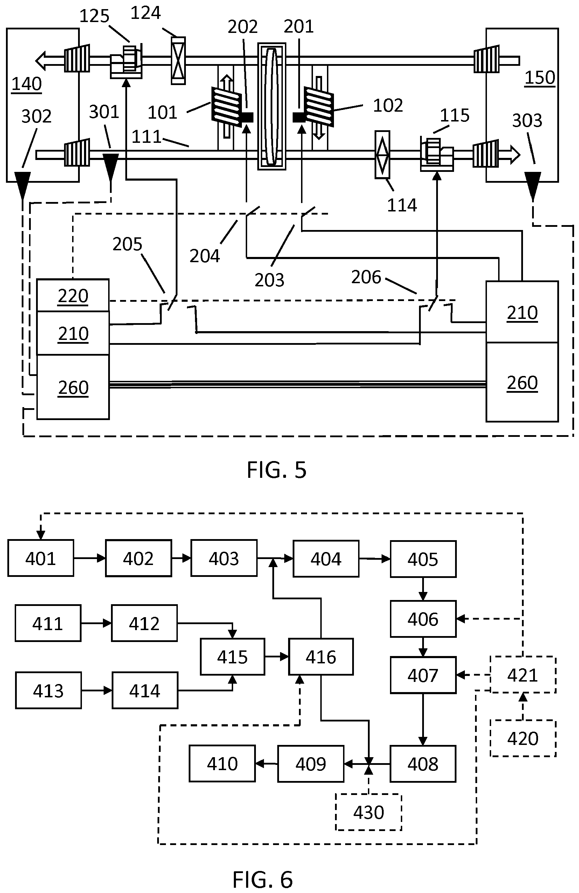

In further embodiments of the system of the present invention, sensors provide feedback. FIG. 5 shows a particular embodiment, similar to the one in FIG. 4, comprising a set of sensors. These sensors 301, 302, 303 detect the conditions (temperature, humidity, velocity, etc.) of the air outdoors, indoors and/or in any of the ducts. For example, in buildings with high humidity, such as indoor swimming pools, moisture sensors are advantageous. The present invention is not limited thereto, and other sensors such as motion sensors, for sensing occupancy of a room and adjusting the activity of the air handling unit, may be also used.

Embodiments of the present invention may be applied to buildings such as offices, indoor expositions or galleries, swimming pools and other sports centers, convention centers, concert halls, etc., by making suitable configurations.

Existing software can be advantageously applied to the present invention, for example open source software, as well as standard protocols. In particular examples of the present invention, air control software of air conditioning devices may be applied to embodiments of the present invention, although the present invention may not be limited thereto, and dedicated software may also be used. As an example, the unit may comprise a serial communications protocol (such as protocols in Modbus controllers) and an interface (e.g. a standard field controller), for sending and receiving sensor data, which may be done through RTU. The protocol may be used as well to send commands to the switch control for controlling e.g. the actuators of the dampers and/or the speed of the pumps. The air handling unit and the control system may be integrated in a building management systems (BMS), for sensing of the environmental variables such as building occupancy, indoors and outdoors temperature and humidity, etc. and efficiently managing the energy and comfort requirements.

Some embodiments of the present invention may comprise standard processors and interfaces (such as universal serial buses USB, or IEEE 1394), so the system may be controlled by any standard computer. The system may advantageously be a "plug-and-play" device.

In a second aspect of the present invention, a method for controlling an air handling system according to embodiments of the first aspect of the present invention is provided. This method allows the control of air flow, combined with control of the heat pump system, for maintaining constant air volumes in the input and output partitions at any time while in use.

With reference to FIG. 5, the system may obtain data from a plurality of sensors 301, 302, 303 and, based on the algorithms, decide to recirculate a predetermined volume of air (e.g. by opening damper 102 to a predetermined extent) or draw a predetermined volume of outdoors air (e.g. by closing damper 102 to a predetermined extent). In advantageous embodiments of the present invention, the pressure is the same in both input and output air partitions 110, 120 at all times.

With reference to the flowchart of FIG. 6, an example of an algorithm that may be applied to the system is illustrated. A pumping system (e.g. ventilators) may force 401 air from outdoors into an air handling unit, making it flow through an air supply duct 111. The air is introduced 402 in an energy recuperation unit 130, in which energy is interchanged 403 with the air of an air return duct 121. The air then enters 404 the evaporator unit 114 of a heat pump, and its temperature, humidity etc. are changed 405 according to the working regime. Finally it is forced 406 through an outlet vent 116 into the cabin of a vehicle, a room, or any indoors area, e.g. via ventilators 115. Conversely, the stale air from indoors is drawn 407 through an air return duct 121, for example using ventilators 125, it flows 408 through an energy recuperation unit 130 and then it passes 409 through the condenser 124 of the heat pump. After the air has absorbed the energy from the heat pump, it is then forced 410 through an output vent 126 to outdoors, for example via a pumping system 125. In embodiments of the second aspect of the present invention, one or more sensors 301, 302, 303 may determine one or several variables, and a decision algorithm may change the volume of recirculating air in the air handling system, e.g. by changing the degree of aperture of the dampers 101, 102 (the present invention not being limited thereto), and may execute other operations such as activating alarms.

As an exemplary embodiment of the present invention, occupancy sensors (e.g. motion sensors) and Interior Air Quality (IAQ) sensors may determine 411 the amount of breathable air. The algorithm may decide 412 the maximum and minimum amount of required or desired recirculation of air to keep breathability levels in the safe zone. Subsequently or simultaneously, indoors and outdoors temperature and humidity sensors may determine 413 the level of comfort indoors. The algorithm may determine that the outdoors humidity is too high compared to indoors, and decide 414 to allow recirculation of air, within the range established in the previous step. Then, the dampers may open 415 to the degree decided by the system in the previous steps, and allow a certain volume of recirculating air to mix 416 with the input air after it has passed 402 through the energy recuperation unit 130 and before entering 404 the evaporator unit 114. The total volume of air shall be the same in both input and output air partitions 110, 120, hence an appropriate volume of air would mix 416 with the output air, after being introduced 408 in the energy recuperation unit 130 and before entering 409 the condenser 124.

Further and/or different sensors and protocols may be implemented within embodiments of the present invention, for deciding the volume of recirculation of air and for keeping the volumes in both input and output air partitions 110, 120 the same. Additionally, further sensors may detect 420 an emergency, such as excess of frost in the condenser, indoors fire, or harmful organisms in the duct (e.g. mold, bacteria), and the system may set 421 an alarm off, then turn the pumps 115, 125 off and stop or allow recirculation of air, depending on the nature of the emergency situation.

Embodiments of the second aspect of the present invention may include other steps, such as heating up 430 the return air using the waste heat of an integrated heat pump compressor before entering 409 in the condenser, or the waste heat of an exhaust pump, reducing the need of condenser defrosting.

For example, according to embodiments of the second aspect of the present invention, telemetry communication via RTU and the master/slave unit 260 may be used for sending data obtained 411, 413 by sensors to a weather forecast module, which may comprise tables and matrices in memory modules, and microprocessors, and determine 412, 414 a line of action (e.g. opening the dampers 101, 102) which is communicated 415 to the switch controls 220, according to embodiments of the method of the present invention.

In another exemplary embodiment of the method, only the dampers 101, 102 and pumps 115, 125 may be controlled with a decision algorithm according to the information from a first and/or a second regions 140, 150 (e.g. outdoors and/or indoors) obtained by one or more outdoor sensors 302 and one or more indoor sensors, e.g. moisture sensors, temperature and air quality sensors, and even light sensors or motion sensors. The control system may use a matrix with a number of variables such as air temperature in every partition and duct of the unit, temperature in the first and second region (e.g. outdoor and room temperature), moisture, air quality, pressure control and energy demand. The matrix can be implemented with a priority handling on the damper and/or ventilator controls 220. This system may comprise look-up tables, and it may even comprise a built-in weather forecast module. A set of priorities in the implementation may take into account:
- Creating high comfort in the second region (e.g. indoors)
- Controlling air temperature of the output air, ahead of the condenser
- Hold off defrosting mode of the condenser in winter mode (hence reducing the formation of frost in the condenser)
- Within the variable parameters, reuse as much energy as possible and using the minimum amount of energy in order to maintain indoor conditions.

In addition to increasing comfort, reducing maintenance of the evaporator /condenser and saving energy, the system helps in reducing energy peak loads in the electricity network by predicting energy demands of the building.

The system may balance several parameters. For example, the parameters may include:
- Current room temperature (Trc) and demanded temperature (Trd)
- Return and supply air temperature (Tra, Tsa)
- Supply and exhaust air temperature (Tsa, Tea)
- Fresh air intake temperature, temperature in front of condenser (Tfa, Tfc)
- Opening of first damper 101 (Od1) and second damper 102 (Od2)
- Air quality of the room Qa.

In an exemplary embodiment of the method, comfort has priority, and the unit will control Tsa in order to bring Trc as close as possible to Trd, creating maximum comfort. To do so, the heat pump needs to produce a certain amount of energy. The second priority reduces energy consumption, so the following parameters can be analysed: possibility of working on free cooling (Trc > Trd > Tfa), or working on free heating (Trc < Trd and Tfa > Trd). Additionally to energy saving, controlling Qa may be added as a threshold of minimum air quality below which the reduction of energy consumption is disregarded, prioritizing air quality. This can be included in the algorithm.

In an example, the indoor sensors 303 may comprise motion sensors, temperature, humidity and indoor air quality (IAQ) sensors, e.g. for detecting the occupancy level of the building and the amount of breathable air. For example, the system may have set that the threshold of minimum breathable air should be higher in case of high indoors occupancy. Hence, for a predetermined amount of breathable air, the system may decide to open the dampers 101, 102, allowing recirculation and saving energy while keeping a good comfort status. If the level of occupancy is low, it is even possible to reuse all of the return air (thus Od2 is 100%). When there is a predetermined level of occupancy in the room, the system may close the dampers and improve IAQ. Controlling Od2 on that matter results in a reduction of energy used by the heat pump to get the room conditioned. The air volume that the heat pump needs to obtain that amount of energy from the exhaust air is also much lower. Od1 will be controlled on that matter, for obtaining the same amount of air volume.

The control may change for different outdoor circumstances. For example under freezing temperatures, the heat pump needs a threshold air temperature to extract the needed energy and provide it to the supply air. To control these working limits, the unit takes account of the Tfc and when a critical point is reached, it overrules Od1 and Od2 to create an airflow (hence, working as a conditioned air unit) coming from the exhaust air, across the condenser.

Ventilator speed may also be taken into account. The unit may control both of the ventilators 115, 125 separately, so the ventilation speed of the supply air can be different from the ventilation speed of the output air. By controlling these in extension on the above, the unit can take account of maximum energy reduction, even in extreme outdoor conditions.

The working pressure of the compressor is a particular measurable parameter to take into account. It is advantageous that the pressure at the end of the evaporator (also known as low-pressure of the compressor) can be tuned in order to reduce or avoid frosting problems. In an exemplary embodiment, a compressor inside the unit is working on R410A coolant. In these typical cases, low-pressure of the compressor has to be higher than 4.5 bar. Lower than that, ice can grow in the evaporator side and this risk is higher the longer the compressor stays under that limit. This means that there will be energy loss, the energy needed by the condenser will not be provided, temperature drops, more icing occurs, eventually stopping the whole system. When in extreme conditions icing would appear and the energy loss would be too big, in embodiments of the present invention the control system automatically switches off normal control, closes by-pass dampers and levels both ventilators to the same air volume. By doing so, the system and its pressure will get back under control, low-pressure will rise and normal control will take over again.

A theoretical model of a system according to embodiments of the present invention has been tested on performance rate, under extreme conditions:
- Unit tested by:
   Current room temperature Trc: 16°C
   Demanded temperature Trd: 24°C
   Return air temperature Tra: 16°C
   Temperature in front of condenser Tfa: -2°C
   Opening of first damper Od1: 100% opening
   Opening of second damper Od2: 100% opening
   Ventilator speed exhaust: 100%
   Ventilator speed supply: 100%
   Volume difference between supply and return: 10%
- Measured results:
   Supply air temperature Tsa: 36°C
   Compressor speed: 87% load
   Low pressure compressor stabilised on +/-6,3bar

In some embodiments, the method may be implemented in standard software and devices, such as for instance Modbus systems. Existing control software for air conditioning may be applied to embodiments of the present invention with minimum or no adaptation. Also, standard Variable Air Volume system software may also be included in certain embodiments of the present invention.

In some embodiments of the present invention, the first and second dampers 101, 102 may be interconnected, e.g. they may be controlled by the same controller, or they may be connected to the same controlling unit. This may simplify also the algorithm, because a single signal may control both dampers.

Although in embodiments of the present invention it is advantageous to provide the same air volume, embodiments with a difference of air volumes may exist. The difference of air volumes at which the heat pump draws enough energy from the return air depends on the air temperature and other factors. For example, at less than 70% of air volume at 0°C or lower, there may not be enough energy to heat up the air. At 80%, there may not be enough energy at -8°C. The present invention allows a fine regulation of air volumes, via recirculation through the bypasses, to reduce the volume difference. In that case it is possible for the system to be controlled by a control system with difference of air volume control. Dampers may be finely controlled for improving energy efficiency.

## Claims

1. A device for air handling, comprising:
- an input air partition (110) comprising an air supply duct (111) with an evaporator unit (114),
- an output air partition (120) comprising an air return duct (121) with a condenser (124),
- an energy recuperation unit (130) in part of the air supply duct (111) and in part of the air return duct (121), for thermal contact between the air supply and air return ducts, the energy recuperation unit (130) adapted for interchanging energy between the input air before the evaporator unit (114) and the output air before the condenser (124),
further comprising
- a first and second recirculation bypasses (113, 123, 213, 223) for recirculating air between the air supply and the air return ducts (111, 121), between the condenser (124) and the energy recuperation unit (130) and between the evaporator unit (114) and the energy recuperation unit (130), respectively,
- a damper (101) in the first recirculation bypass (113, 213), for controlling the volume of input air reaching the condenser (124) from the input air partition (110),
- a further damper (102) in the second recirculation bypass (123, 223), for controlling the volume of return air reaching the evaporator unit (114) from the output air partition (120).

2. The device of the previous claims, the condenser (124) further comprising a compressor (160) within the output air partition (120), the compressor (160) being in thermal contact with the air in the air return duct (121) before the condenser (124).

3. The device of any of the previous claims further comprising a control unit for control of at least the dampers (101, 102).

4. The device of any of the previous claims wherein the damper (101) in the first bypass (113, 213) is connected to the damper (102) in the second bypass (123, 223), for performing the same control of air volume in both bypasses.

5. A system for controlling the device of any of the previous claims, the system comprising at least one actuator (201, 202, 504) for opening and closing at least one damper (101, 102) in a bypass (113, 213, 123, 223), and at least one controller (220) for controlling the at least one actuator (201, 202, 504).

6. The system of the previous claim further comprising at least one pump (115, 125) for forcing air through an outlet (116, 126), the at least one pump (115, 125) comprising a controller for modulating its speed.

7. The system of the previous claim wherein the controller (220) is adapted to control the operation of at least one pump (115, 125).

8. The system of any of the claims 5 to 7, further comprising any or all the sensors (301, 302, 303) among air quality, temperature, occupancy, humidity sensors inside and/or outside the unit.

9. The system of any of the claims 5 to 8, further comprising a central processing unit comprising processors and memory tables, for control of at least the first and second damper (101, 102).

10. The system of the previous claim, further comprising a weather forecast module.

11. A method for controlling an air handling device according to any of claims 1 to 4, comprising the steps of
- introducing (401) air through an input air partition (110),
- selectively recirculating (415) air through a bypass (113) comprising a damper (101) for recirculating air to an output air partition (120),
- flowing (402) the air in the input air partition (110) through an energy recuperation unit (130),
- circulating (404) the input air through an evaporator unit (114),
- removing (407) air through the output air partition (120),
- selectively recirculating (415) air through a bypass (123) comprising a damper (102) for recirculating air to the input air partition (110),
- flowing (408) the air in the output air partition through the energy recuperation unit,
- circulating (409) the output air through a condenser (125) further comprising regulating (416) a predetermined volume of air in the input and output air partitions (110, 120).

12. The method of the previous claim, wherein regulating (416) a predetermined volume of air comprises controlling the damper (101, 102) in the first and second bypasses (113, 123) via a same signal for obtaining a same volume of air in the input and output air partitions (110, 120).

13. The method of any of claims 11 or 12, wherein regulating (416) a predetermined volume of air comprises controlling pumping systems of the input and output partitions (110, 120).

14. The method of the previous claim, further comprises sensing (411, 413) at least one environmental variable and controlling (412, 413) the damper (101, 102) in the first and second bypasses (113, 123) as a response to the sensed variable.
